# EUROPÄISCHE PATENTANMELDUNG

(11) **EP 3 111 752 A1**
(43) Veröffentlichungstag der Anmeldung: **04.01.2017**
(21) Anmeldenummer: 16001038.5
(22) Anmeldetag: 06.05.2016
(51) Int. Cl.: A01G 9/12

(54) **STÜTZE**

(30) Priorität: 02.07.2015 DE 102015008682
(71) Anmelder: Schreiner, Helmut, 82377 Penzberg (DE)
(72) Erfinder: Schreiner, Helmut, 82377 Penzberg (DE)
(74) Vertreter: Leinweber & Zimmermann

(57) **Zusammenfassung**

Die Erfindung betrifft eine Stütze (10) zur Abstützung pflanzenartiger Gewächse, mit einem zur vertikalen Aufstellung vorgesehenen Axialträger (1) und einem im Funktionszustand der Stütze an den Träger (1) angekoppelten kontinuierlichen Abstützbereich (8), dessen Erstreckung eine in bezüglich der Axialrichtung des Trägers (1) in Umfangsrichtung verlaufende Richtungskomponente aufweist und dessen wirksame Abstützlänge (8L) durch eine unter insbesondere elastischer Beanspruchung des Abstützbereichs (8) erfolgenden Änderung seiner Ankopplung (4, 5) einstellbar ist.

## Beschreibung

Die Erfindung betrifft eine Stütze zur Abstützung pflanzenartiger Gewächse.

Derartige Stützen sind bekannt und werden vielfach in Gärten oder auch Gewächshäusern verwendet, da oftmals pflanzenartige Gewächse, insbesondere Stengelpflanzen/Blumen wie beispielsweise Rittersporn, die Pfingstrose oder diverse Lilienarten keine ausreichende Eigensteifigkeit über ihre Stengel aufbringen, um eine ansehnliche äußere Erscheinungsform einer aufgerichteten Stellung beibehalten können, insbesondere unter Einfluss heftiger Witterungseinflüsse wie Sturm oder Starkregen.

Mit bekannten derartigen Stützen gelingt jedoch nicht immer eine im ausreichenden Maße geeignete Abstützung, so dass der Erfindung die Aufgabe zugrundeliegt, eine derartige Stütze in ihren Abstützungseigenschaften weitergehend zu verbessern.

Diese Aufgabe wird von der Erfindung durch eine Stütze gemäß Anspruch 1 gelöst. Weitere vorteilhafte Ausführungsformen sind in den Unteransprüchen angegeben.

Die Erfindung stellt somit bereit eine Stütze zur Abstützung pflanzenartiger Gewächse, mit einem zur vertikalen Aufstellung vorgesehenen Axialträger und einem im Funktionszustand der Stütze an den Träger angekoppelten kontinuierlichen Abstützbereich, dessen Erstreckung eine in bezüglich der Axialrichtung des Trägers in Umfangsrichtung verlaufende Richtungskomponente aufweist und dessen wirksame Abstützlänge durch eine unter insbesondere elastischer Beanspruchung des Abstützbereichs erfolgenden Änderung seiner Ankopplung einstellbar ist.

Aufgrund der Erstreckung des Abstützbereichs in bezüglich der Axialrichtung des Axialträgers in Umfangsrichtung verlaufende Richtungskomponente gelingt zum einen eine zuverlässige Abstützung beispielsweise der Stengelpflanzen, die zwischen Axialträger und dem Abstützbereich angeordnet und von letzterem gegen eine radial nach außen gerichtete Bewegung wie etwa ein Umfallen oder ein seitliches Wegknicken abgestützt werden. Zudem kann die wirksame (in Axialrichtung betrachtete) Abstützlänge des Abstützbereichs eingestellt werden, allein durch eine Änderung seiner Ankopplung an den Axialträger, beispielsweise an nur einer Ankopplungsstelle, da über die elastische Beanspruchung des Abstützbereichs diese Änderungsmaßnahme aufgrund des kontinuierlichen Abstützbereichs über die Abstützlänge wirkt. Die wirksame Abstützlänge ist somit der Axialabschnittsbereich des Axialträgers, entlang dessen die Umfangsrichtungserstreckung des Abstützbereichs vorhanden ist. Diese wird üblicherweise kleiner sein als die aus dem Boden ragende Höhe des Trägers, aber nicht zwangsläufig, beispielsweise könnte die Ankopplung des oberen Endes des Abstützbereichs an die obere Ankopplungsstelle am Träger auch noch eine vertikale Richtungskomponente beinhalten.

In einer besonders bevorzugten Ausführungsform besteht die Ankopplung des Abstützbereichs an seinen beiden Enden. Dies ermöglicht bei beidseitig lösbar realisierter Ankopplungen zudem eine absolute Höheneinstellung des Abstützbereiches auch ohne Änderung der wirksamen Abstützlänge (die in einer einfachen Konfiguration dem axialen Abstand der beiden Ankopplungsstellen am Träger entspricht). Auf diese Weise ist die Stütze hinsichtlich der gewünschten Abstützhöhe und Abstützlänge völlig flexibel.

In einer weiteren bevorzugten Ausführungsform weist der Abstützbereich einen Abschnitt auf, in dem sein radialer Abstand von dem Axialträger mit zunehmender Höhe zunimmt. Dies ermöglicht insbesondere im höher gelegenen Bereich eine Abstützung ohne Beschädigung von dichtem Blattwerk bei gleichzeitiger Raumeinsparung im untengelegenen Bereich nebst damit einhergehender einfacherer Zugänglichkeit der Einpflanzstelle der Gewächse.

In einer nochmals bevorzugten Ausführungsform ist der radiale Abstand des Abstützbereiches von dem Axialträger durch ein Verdrehen der Ankopplungsstellen der beidseitigen Ankopplung gegeneinander einstellbar. Dadurch wird die Flexibilität der Stütze weiter erhöht und sie ist universeller einsetzbar für einerseits Gewächse, die tendenziell mehr in die Breite und andererseits Gewächse, die tendenziell eher in die Höhe wachsen. Der Ort der Abstützung kann somit auch hinsichtlich der radialen Komponente eingestellt werden. Zudem wird dadurch eine Schutzmaßnahme gegen beispielsweise das oben angesprochene Schlechtwetter möglich, indem der Abstützbereich dazu verwendet wird, die Pflanzen quasi "festzuzurren".

In einer bevorzugten Ausführungsform ist die Abstützlängen-Einstellbarkeit und/oder die Radialabstands-Einstellbarkeit stufenlos. Dies wird bevorzugt dadurch realisiert, dass der Querschnitt des Axialträgers rund ist und der Ankopplungsmechanismus z.B. einen Festlegebereich mit einer an den Durchmesser des Axialträgers angepassten Bohrung aufweist, die axial am Axialträger gleiten kann, aber sich auch (unter entsprechender Kraftausübung) um den Axialträger drehen lässt.

Der Abstützbereich weist bevorzugt eine Formeinprägung und insbesondere Formerinnerungseigenschaft auf, bewegt sich also bei nicht übermäßiger elastischer Beanspruchung nach Wegfall der Beanspruchungskraft wieder in die durch die Formeinprägung vorgegebene Form. Die Formeinprägung kann sich auf die in Umfangsrichtung verlaufende Richtungskomponente beschränken, aber auch eine weitere Richtungskomponente umfassen wie die Axialrichtung.

Ist letzteres der Fall, so wird es bevorzugt, wenn ein Verhältnis von maximalem Radialabstand zur wirksamen Abstützlänge gemäß der Formeinprägung im Bereich von 1/5; 4/5], bevorzugt [1/4; 3/4], insbesondere [1/3; 2/3] liegt. Dies erlaubt eine Grundeinstellung des Funktionszustands, die ohne elastische Beanspruchung des Abstützbereichs im Funktionszustand eine für zahlreiche Anwendungen geeignete Abstützung bereitstellt. Der Nutzer erhält unter Anwendung der Grundeinstellung bereits vernünftige Abstützergebnisse.

In diesem Zusammenhang kann für die Radialabstandszunahme bei zunehmender Höhe gemäß der Formeinprägung, angegeben durch tan α, im Bereich von [1/9; 1/3], bevorzugt [1/8; 1/4], insbesondere [1/7; 1/5] liegt.

α gibt dabei den spitzen Winkel eines gedachten Dreiecks an, das man erhält, wenn man sich den Abstützbereich bis auf Radialabstand Null fortgesetzt denkt (Spitze des Dreiecks mit Winkel α) und die Projektion des Abstützbereichs auf einen den Axialträger beinhaltenden Axialschnitt betrachtet (eine Seite des Dreiecks ist dann der gedacht verlängerte Axialträger).

Wie oben bereits erläutert, ist die Ankopplung bevorzugt lösbar/arretierbar. Bei Abkopplung des Abstützbereichs durch Lösen der Ankopplung an den Ankopplungsstellen ist es möglich, den Abstützbereich in Axialrichtung bevorzugt bis auf die eigene Materialstärke zu komprimieren (sofern die Formeinprägung eine axiale Grundhöhe beinhaltet), bzw. den Abstützbereich in seine durch eine Formeinprägung vorgegebene planare Form, insbesondere die einer Spirale, zurückkehren zu lassen. Damit wird eine platzsparende Aufbewahrungsmöglichkeit bei Nichtbenutzung bzw. ein vereinfachter Transport der Stütze erreicht.

Hinsichtlich der Ankopplung wird es bevorzugt, dass sich diese von Hand lösen/arretieren lässt, bevorzugt ohne dabei ein Werkzeug zu benötigen. Dies könnte etwa über eine Schraubverbindung mit Handgriff oder eine andere Art einer bekannten Schnellkupplung erfolgen.

Hinsichtlich des Materials des Abstützbereichs wird ein elastisches Material mit Formerinnerungseigenschaften bevorzugt, insbesondere Federstahl.

Desweiteren wird es bevorzugt, dass der Abstützbereich helixartig geformt ist, insbesondere über seine Formeinprägung bevorzugt wenigstens drei, insbesondere wenigstens vier Windungen (volle Umdrehungen) aufweist, und/oder bevorzugt acht oder weniger, insbesondere sieben oder weniger Windungen aufweist. Der Abstützbereich ist jedoch nicht auf zylindrische Hüllkurven eingeschränkt, sondern kann (z.B. wie oben erläutert) z.B. eine kegelstumpfartige Hüllfläche aufweisen.

Da aufgrund der helixartigen Form in einem vorgegebenen geringen Höhenintervall die Abstützung nur über den zugeordneten Winkelbereich gegeben ist, wird dadurch erreicht, dass der axiale Abstand zwischen zwei diesen Winkelbereich abdeckenden Abschnitten des Abstützbereiches nur so groß ist, dass eine wirksame Abstützung gegen Radialbewegungen in diesem Winkelbereich nach außen zuverlässig gewährleistet ist. Zudem wachsen die Gewächse glatt in die durch die Helixform gegebene Begrenzung hinein.

Weitere Merkmale, Einzelheiten und Vorteile der Erfindung ergeben sich aus der nachfolgenden Beschreibung mit Bezug auf die Zeichnung, deren einzige

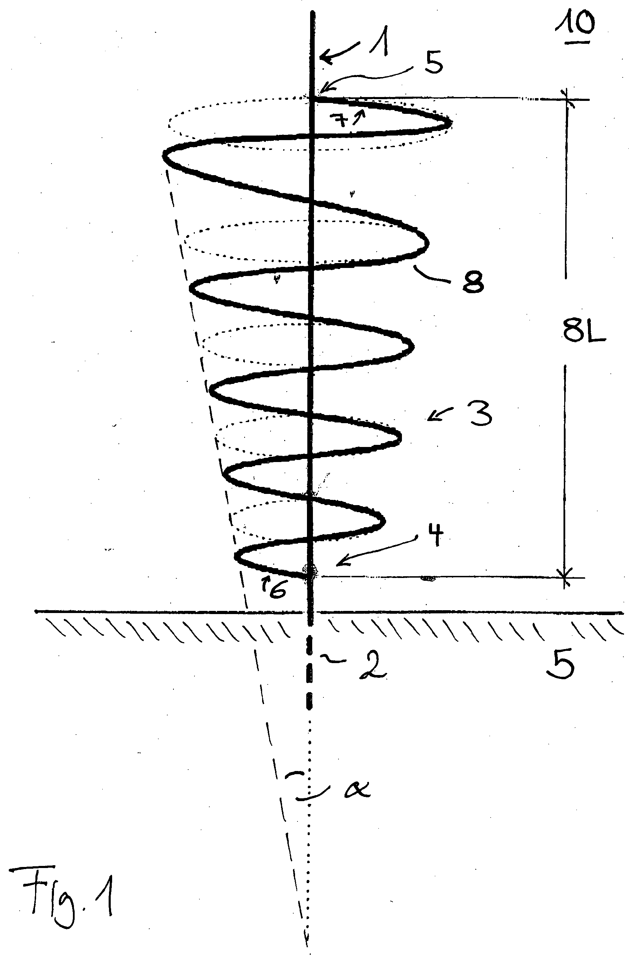

Figur 1 schematisch den Aufbau einer erfindungsgemäßen Stütze zeigt.

In Fig. 1 ist schematisch eine Stütze 10 im Funktionszustand gezeigt. Dazu ist eine den Axialträger bildende Stange 1 von im Wesentlichen runden Querschnitt über einen Abschnitt 2 so tief in das Erdreich 5 getrieben, dass ein sicheres Stehen der Stange 1 gewährleistet ist. In Bodennähe ist am aus dem Boden herausstehenden Abschnitt 10 der Stange 1, die in der Figur mit 4 bezeichnet ist, ein Ankopplungsmechanismus 4 vorgesehen, nahe dem oberen Stangenende ein entsprechender Ankopplungsmechanismus 5. Beide Ankopplungsmechanismen sind in diesem Beispiel identisch ausgeführt und weisen eine Ringstruktur auf, die mittels einer von Hand lösbaren Schraubverbindung an der Stange 1 festlegbar ist und mit jeweils einem Ende des weiteren Bauteils 3 der Stütze verbunden ist. Dieses weitere Bauteil besteht aus Federstahl und ist in seinem zentralen Bereich, der sich bis sehr nahe an seine Enden erstreckt, in Form einer Helix mit kegelstumpfartiger Hüllfläche gewunden. Dieser gewundene Bereich bildet den Abstützbereich 8, dessen unteres Ende über einen kurzen Radialabschnitt 6 mit der Ankopplungsstelle 4 verbunden ist und über einen demgegenüber etwas längeren radialen Abschnitt 7 am oberen Ende mit der oberen Ankopplungsstelle 5.

In diesem Ausführungsbeispiel ist der aus dem Boden ragende Abschnitt der Stange 1 etwa 85 cm lang, und der Axialabstand 8L zwischen den beiden Ankopplungsstellen 4 und 5 etwa 65 cm, der maximale radiale Abstand von der Stützstelle oben beträgt ca. 21 cm, und unten ca. 10 cm. Es versteht sich jedoch, dass sich diese absoluten Größenangaben, die im vorliegenden Fall beispielsweise für Rittersporn geeignet sind, auf höhere oder auch geringere Absolutwerte ändern lassen, bevorzugt unter Wahrung der jeweiligen Relativverhältnisse.

Aus der Figur ist ohne Weiteres zu erkennen, dass sich durch Lösen des Kopplungsmechanismus an der Ankopplungsstelle 5 und dessen Wiederarretieren an der Spitze der Stange 1 die Abstützlänge 8L erhöht und bis zum Stangenende reicht. Die Abstützlänge könnte jedoch auch verringert werden, beispielsweise indem der Ankopplungsmechanismus an der unteren Ankopplungsstelle 4 gelöst wird und beispielsweise auf ca. der halben Stangenhöhe wieder arretiert wird. Dann findet eine wirksame Abstützung im Bereich der oberen Stangenhälfte statt.

Desweiteren ist erkennbar, dass sich die Windungszahl von in diesem Ausführungsbeispiel 5 dadurch erhöhen lässt, dass man den Ankopplungsmechanismus beispielsweise an der oberen Ankopplungsstelle 5 löst und durch dessen Drehung um die Stange 5 im von oben betrachtet Gegenuhrzeigersinn die Windungslänge in Umfangsrichtung bei gleichzeitiger radialer Verengung erhöht. Auf diese Weise kann eine engere Abstützung nebst den oben erläuterten Schutzmaßnahmen durchgeführt werden.

Genauso kann bei Bedarf durch Drehung im Uhrzeigersinn unter radialer Aufweitung die Windungslänge verringert werden. Man erkennt, dass die beschriebene Stütze eine individuelle Anpassung der Stütze auf zahlreiche Abstützanforderungen ermöglicht und dadurch nicht nur vielfältig einsetzbar, sondern in jeder Einsatzsituation eine situationsangepasste Abstützung erlaubt, so kann die eingestellte Abstützlänge 8L auch mit dem Wachstum der abzustützenden Gewächse "mitwachsen".

Die Erfindung ist nicht auf die im Ausführungsbeispiel beschriebenen Einzelheiten eingeschränkt. Vielmehr können die Merkmale der nachstehenden Ansprüche und der voranstehenden Beschreibung einzeln und in Kombination für die Verwirklichung der Erfindung in ihren verschiedenen Ausführungsformen wesentlich sein.

## Patentansprüche

1. Stütze (10) zur Abstützung pflanzenartiger Gewächse, mit einem zur vertikalen Aufstellung vorgesehenen Axialträger (1) und einem im Funktionszustand der Stütze an den Träger (1) angekoppelten kontinuierlichen Abstützbereich (8), dessen Erstreckung eine in bezüglich der Axialrichtung des Trägers in Umfangsrichtung verlaufende Richtungskomponente aufweist und dessen wirksame Abstützlänge (8L) durch eine unter insbesondere elastischer Beanspruchung des Abstützbereichs (8) erfolgenden Änderung seiner Ankopplung (4, 5) einstellbar ist.

2. Stütze nach Anspruch 1, bei der die Ankopplung des Abstützbereichs an seinen beiden Enden (6, 7) besteht.

3. Stütze nach Anspruch 1 oder 2, bei der der Abstützbereich einen Abschnitt aufweist, in dem sein radialer Abstand von dem Axialträger mit zunehmender Höhe zunimmt.

4. Stütze nach einem der vorhergehenden Ansprüche, bei der ein/der radiale Abstand des Abstützbereichs von dem Axialträger durch ein Verdrehen der Ankopplungsstellen der beidseitigen Ankopplung gegeneinander einstellbar ist.

5. Verfahren nach einem der vorhergehenden Ansprüche, bei dem die Abstützlängen-Einstellbarkeit und/oder die Radialabstands-Einstellbarkeit stufenlos ist.

6. Stütze nach einem der vorhergehenden Ansprüche, bei der der Abstützbereich eine Formeinprägung und insbesondere eine Formerinnerungseigenschaft aufweist.

7. Stütze nach einem der vorhergehenden Ansprüche, bei der ein Verhältnis von maximalem Radialabstand zur wirksamen Abstützlänge gemäß der Formeinprägung im Bereich von [1/5; 4/5], bevorzugt [1/4; 3/4], insbesondere [1/3; 2/3] liegt.

8. Stütze nach einem der Ansprüche 3 bis 7, bei der die Radialabstandszunahme bei zunehmender Höhe gemäß der Formeinprägung, angegeben durch tan α, im Bereich von [1/9; 1/3], bevorzugt [1/8; 1/4], insbesondere [1/7; 1/5] liegt.

9. Stütze nach einem der vorhergehenden Ansprüche, bei der die Ankopplung lösbar/arretierbar ist und sich die Axialerstreckung des Abstützbereichs im abgekoppelten Nichtfunktions-Zustand auf ein Vielfaches seiner Materialstärke, insbesondere auf seine Materialstärke verringern lässt.

10. Stütze nach einem der vorhergehenden Ansprüche, bei der sich die Ankopplung von Hand lösen/arretieren lässt, insbesondere werkzeugfrei, insbesondere über eine Schraubverbindung oder Schnellkupplung.

11. Stütze nach einem der vorhergehenden Ansprüche, bei der der Abstützbereich elastisch ist und insbesondere aus Federstahl gebildet ist.

12. Stütze nach einem der vorhergehenden Ansprüche, bei der der Abstützbereich helixartig geformt ist und insbesondere gemäß Formeinprägung bevorzugt wenigstens drei, insbesondere wenigstens vier Windungen aufweist, und/oder bevorzugt acht Windungen oder weniger, insbesondere sieben Windungen oder weniger aufweist.
